# EUROPEAN PATENT APPLICATION

(11) **EP 4 851 223 A1**
(43) Date of publication of application: **09.12.2026**
(21) Application number: 25749072.2
(22) Date of filing: 31.01.2025
(51) Int. Cl.: C08G 75/08, C08G 18/38, C08G 18/75, C08G 18/76, C08G 75/06, G02B 1/04, G02B 5/18, G02B 5/32, G02B 27/02

(54) **POLYMERIZABLE COMPOSITION, RESIN, RESIN SUBSTRATE, LIGHTGUIDE PLATE, WAVEGUIDE DEVICE, OPTICAL MEMBER FOR EYEWEAR, AND WEARABLE DEVICE**

(30) Priority: 01.02.2024 JP 2024013906; 29.03.2024 JP 2024056978
(71) Applicant: HOYA LENS THAILAND LTD., Pathumthani 12130 (TH)
(72) Inventor: KOUSAKA, Masahisa, Tokyo 160-8347 (JP); OHNISHI, Tomofumi, Tokyo 160-8347 (JP); MANO, Masafumi, Tokyo 160-8347 (JP); MUKAIYAMA, Hiroyuki, Tokyo 160-8347 (JP)
(74) Representative: Kraus & Lederer PartGmbB
(86) International application number: PCT/JP2025/003291
(87) International publication number: WO 2025/164786

(57) **Abstract**

A polymerizable composition containing: an epithio compound containing a compound represented by Formula (E1) (where X is S or O, a is an integer of 0 or 1, R is divalent hydrocarbon having 1 to 10 carbon atoms, b is an integer of 0 or 1, and c is an integer of 0 to 2); a thioether compound having a mercapto group; and a sulfur-containing substance in which an S atomic ratio is 70% by mass or more.

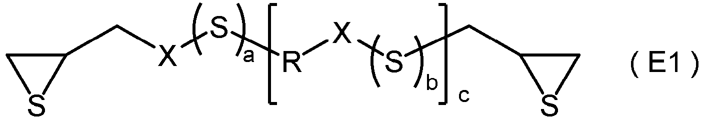

## Description

### Technical Field

The present disclosure relates to a polymerizable composition, a resin, a resin substrate, a light guide plate, a waveguide device, an optical component for eyewear, and a wearable device.

### Background Art

It has been proposed to use, in an augmented reality (AR) wearable device such as a head-mounted display, a light guide plate made of a glass substrate having a high refractive index from the viewpoint of enlarging a field of view (FOV) or the like (see, for example, PTL 1).

Projection light emitted from this type of AR wearable device is moved to the field of view of a device wearer through the light guide plate, an image of the projection light is formed by a diffraction grating or the like, and transmitted light from the outside is delivered, together with the projection light, to the vision of the device wearer, according to the structure.

### Citation List

### Patent Literature

PTL 1: Japanese Patent Application Publication No. 2022-97824

### Summary of Invention

### Technical Problem

Selection of a high-density (3.0 g/cm³ to 5.5 g/cm³) glass composition makes it possible to increase the refractive index of the glass substrate, but this hinders reduction in the weight of the wearable device and leads to decreases in the production yield and processability of the glass substrate. Therefore, it is studied to produce a light guide plate using a resin composition having a low density and a high refractive index.

Therefore, an object of the present disclosure is to provide a polymerizable composition that enables a resin having a high refractive index and a low density to be obtained, the resin, a resin substrate, a light guide plate, a waveguide device, an optical component for eyewear, and a wearable device obtained from the polymerizable composition.

### Solution to Problem

The present inventors have found that it is possible to obtain a polymerizable composition or the like that enables a resin having a high refractive index and a low density to be obtained by using a sulfur-containing substance in which an S atomic ratio is 70% by mass or more.

One embodiment of the present disclosure relates to a polymerizable composition including: an epithio compound containing a compound represented by Formula (E1): 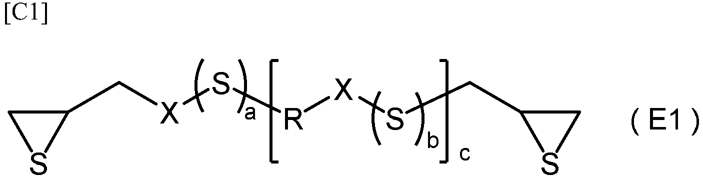
(where X is S or O, a is an integer of 0 or 1, R is a divalent hydrocarbon having 1 to 10 carbon atoms, b is an integer of 0 or 1, and c is an integer of 0 to 2);
a thioether compound having a mercapto group; and
a sulfur-containing substance in which an S atomic ratio is 70% by mass or more.

A light guide plate according to an embodiment of the present disclosure is made of the above-described resin substrate.

A waveguide device according to an embodiment of the present disclosure includes: the above-described light guide plate; and a diffraction grating or a hologram element formed on the light guide plate.

An optical component for eyewear according to an embodiment of the present disclosure includes: a resin lens substrate; and the above-described waveguide device.

A wearable device according to an embodiment of the present disclosure includes: the above-described optical component for eyewear.

### Advantageous Effects of Invention

The present disclosure can provide a polymerizable composition that enables a resin having a high refractive index and a low density to be obtained, the resin, a resin substrate, a light guide plate, a waveguide device, an optical component for eyewear, and a wearable device obtained from the polymerizable composition.

### Brief Description of Drawings

[Fig. 1]

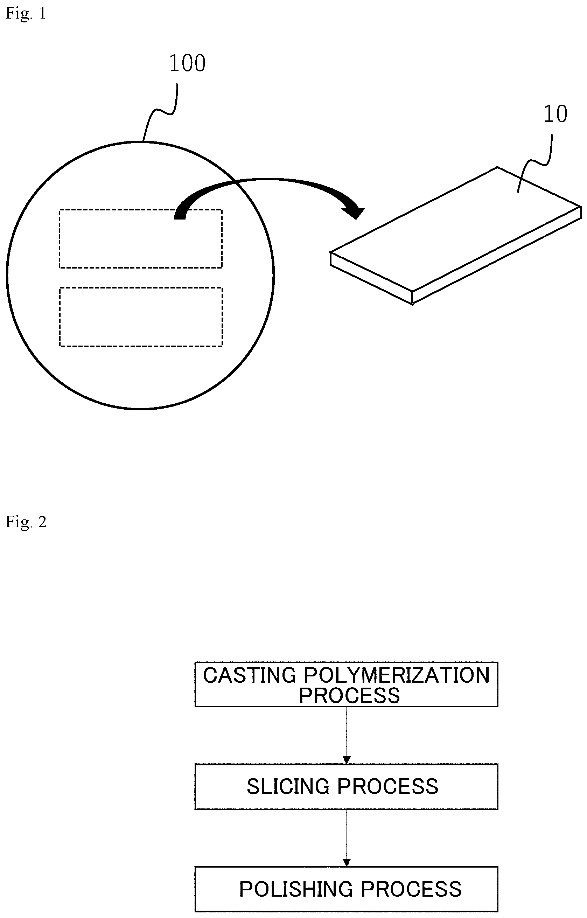

   Fig. 1 is a conceptual diagram illustrating an embodiment of a resin substrate according to the present embodiment.
[Fig. 2]
   Fig. 2 is a diagram illustrating a method for producing a resin substrate according to the present embodiment.
[Fig. 3]

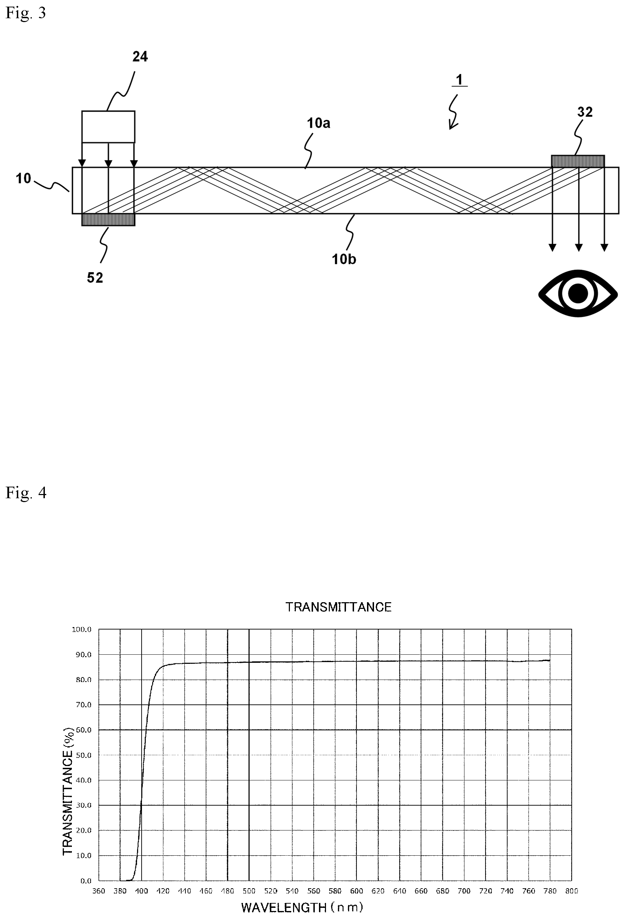

   Fig. 3 is a schematic sectional view illustrating an embodiment of a light guide plate according to the present embodiment.
[Fig. 4]
   Fig. 4 is a diagram illustrating a transmittance of a resin substrate in an example.
[Fig. 5]

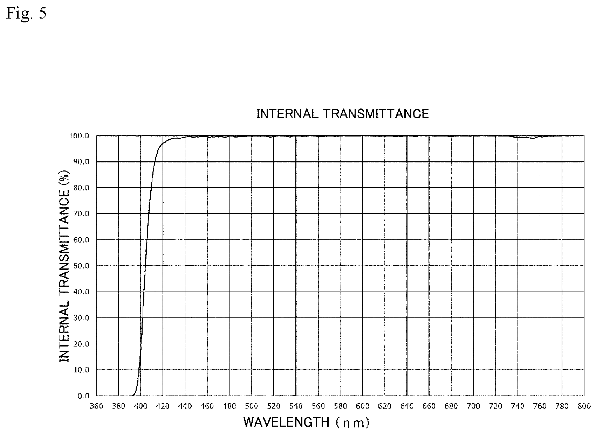

   Fig. 5 is a diagram illustrating an internal transmittance of the resin substrate in the example. Description of Embodiments

Hereinafter, embodiments of the present disclosure (hereinafter referred to as "the present embodiment") will be described in detail, but the present invention is not limited thereto, and can be variously modified within the scope not departing from the gist of the invention. Here, in this specification, for example, the expression of a numerical value range of "1 to 100" encompasses both the lower limit value "1" and the upper limit value "100." In addition, the same applies to the expression of other numerical value ranges.

### [Polymerizable Composition]

A polymerizable composition according to the present embodiment contains: an epithio compound containing a compound represented by Formula (E1): 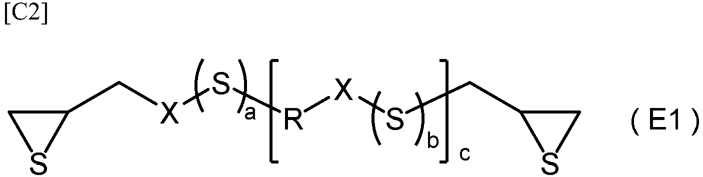
(where X is S or O, a is an integer of 0 or 1, R is a divalent hydrocarbon having 1 to 10 carbon atoms, b is an integer of 0 or 1, and c is an integer of 0 to 2);
a thioether compound having a mercapto group; and
a sulfur-containing substance in which an S atomic ratio is 70% by mass or more.

With the above-described configuration, it is possible to obtain a polymerizable composition or the like that enables a resin having a high refractive index and a low density to be obtained. Also, with the resin composition, it is possible to provide a resin, a resin substrate, a light guide plate, a waveguide device, an optical component for eyewear, and a wearable device with a suppressed yellowness index.

In the polymerizable composition according to the present embodiment, the epithio compound contains a compound (hereinafter, also referred to as a "compound (1)") represented by
Formula (E1): 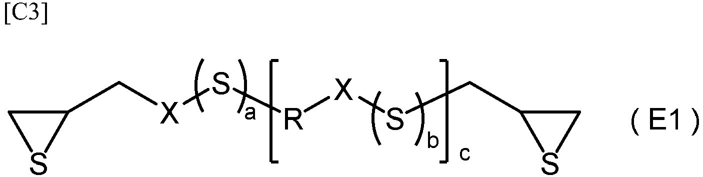 (where X is S or O, a is an integer of 0 or 1, R is a divalent hydrocarbon having 1 to 10 carbon atoms, b is an integer of 0 or 1, and c is an integer of 0 to 2).

It should be noted that in the present disclosure, the "epithio compound" is a generic name of an epithio compound included in the polymerizable composition.

X is preferably S. In a case where X is O, a is preferably 0.

The number of carbon atoms in R is preferably 1 to 4 and more preferably 2 or 3.

Examples of divalent hydrocarbons for R include an ethylene group, a propylene group, and a butylene group.

Specific examples of the compound (1) include bis(β-epithiopropyl)sulfide, bis(β-epithiopropyl)disulfide, bis(β-epithiopropylthio)methane, 1,2-bis(β-epithiopropylthio)ethane, 1,3-bis(β-epithiopropylthio)propane, 1,3-bis(β-epithiopropyloxy)propane, 1,4-bis(β-epithiopropylthio)butane, and bis(β-epithiopropylthioethyl)sulfide. Among these, bis(β-epithiopropyl)sulfide and bis(β-epithiopropyl)disulfide are preferable, and bis(β-epithiopropyl)sulfide is more preferable. In other words, the compound represented by Formula (E1) is more preferably a compound represented by Formula (1-1) below:

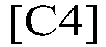

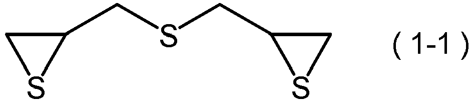

The content (also referred to as purity) of the compound (1) in the epithio compound according to the present embodiment is preferably 90% by mass or more, is more preferably 95% by mass or more, is further preferably 98% by mass or more, and is yet further preferably 99% by mass or more with respect to the total amount of epithio compound. Although the upper limit of the content of the compound (1) is not particularly limited, the upper limit may be 100% by mass or less with respect to the total amount of epithio compound.

The content of the epithio compound in the polymerizable composition is preferably 50% by mass to 98% by mass, is more preferably 60% by mass to 96% by mass, and is further preferably 70% by mass to 96% by mass.

The polymerizable composition according to the present embodiment contains a thioether compound having a mercapto group. It is possible to further reduce the yellowness index of the episulfide resin to be obtained by the polymerizable composition containing the thioether compound having a mercapto group.

The thioether compound having a mercapto group preferably does not contain an oxygen atom.

Although the thioether compound having a mercapto group may be a compound having a branched thioether backbone, the thioether compound is preferably a compound having a cyclic thioether backbone from the viewpoint of further suppressing the yellowness index of the resin to be obtained.

From the viewpoint of further suppressing the yellowness index of the resin to be obtained, the thioether compound having a mercapto group preferably contains a compound represented by Formula (T1): 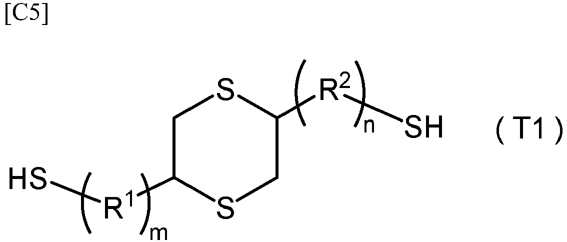 (where
R¹ and R² are each independently a divalent hydrocarbon group having 1 to 6 carbon atoms, and
m and n are each independently 0 or 1).

Specific examples of the compound represented by Formula (T1) include 2,5-bis(mercaptoethyl)-1,4-dithiane and 2,5-bis(mercaptomethyl)-1,4-dithiane. Among these, 2,5-bis(mercaptomethyl)-1,4-dithiane is preferable.

The content of the compound represented by Formula (T1) may be 50% by mass or more, may be 80% by mass or more, may be 90% by mass or more, may be 95% by mass or more, and may be 100% by mass with respect to the total amount of the thioether compound having a mercapto group.

The thioether compound preferably contains a compound represented by Formula (T2): 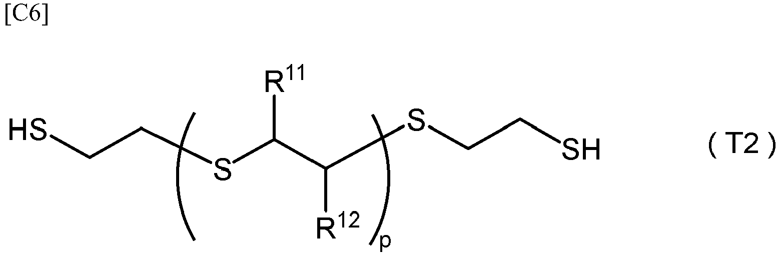 (where
R¹¹ and R¹² are each independently hydrogen or a mercaptomethyl group, and
p is 1 or 2).

Specific examples of the compound represented by Formula (T2) include bis(mercaptoethylthio)mercaptopropane and bis(mercaptomethyl)-3,6,9-trithiaundecanedithiol. Among these, bis(mercaptomethyl)-3,6,9-trithiaundecanedithiol is preferable. Note that bis(mercaptomethyl)-3,6,9-trithiaundecanedithiol may be a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

The content of the compound represented by Formula (T2) may be 50% by mass or more, may be 80% by mass or more, may be 90% by mass or more, may be 95% by mass or more, and may be 100% by mass with respect to the total amount of the thioether compound having a mercapto group.

The content of the thioether compound having a mercapto group is preferably 5 parts by mass to 50 parts by mass, is more preferably 8 parts by mass to 30 parts by mass, and is further preferably 10 parts by mass to 20 parts by mass with respect to 100 parts by mass of the epithio compound from the viewpoint of further suppressing the yellowness index of the resin to be obtained.

The content of the thioether compound having a mercapto group is 10% by mass to 20% by mass, is more preferably 12% by mass to 19% by mass, and is yet more preferably 13% by mass to 18% by mass with respect to the total amount of the polymerizable composition.

The polymerizable composition contains a sulfur-containing substance in which an S atomic ratio is 70% by mass or more. A resin having a high refractive index can be obtained by containing the sulfur-containing substance in combination with the epithio compound.

The S atomic ratio of the sulfur-containing substance is preferably 75% by mass to 100% by mass, is more preferably 80% by mass to 95% by mass, and is further preferably 83% by mass to 90% by mass. The S atomic ratio is a presence rate of sulfur in a molecule. The S atomic ratio can be calculated from the molecular structure.

Examples of the sulfur-containing substance include elemental sulfur and lenthionine. Among these, lenthionine is preferable.

The content of the sulfur-containing substance is preferably 1% by mass to 30% by mass, is more preferably 5% by mass to 20% by mass, and is further preferably 10% by mass to 20% by mass or more in the polymerizable composition.

The polymerizable composition preferably contains a polymerization catalyst. Examples of the polymerization catalyst include nitrogen-containing compounds such as tertiary amines, quaternary ammonium salts, imidazole-based compounds, and pyrazole-based compounds, and phosphorus-containing compounds such as tetrabutylphosphonium bromide.

In a case where the epithio compound is contained, the amount of the polymerization catalyst added to the polymerizable composition is preferably 0.001 parts by mass to 2 parts by mass, is more preferably 0.005 parts by mass to 1 part by mass, and is further preferably 0.01 parts by mass to 0.5 parts by mass with respect to 100 parts by mass of the total amount of the epithio compound.

The polymerizable composition may contain other additives such as an ultraviolet absorber, a mold releasing agent, a coloring agent, an antioxidant, a refractive index modifier, a birefringence modifier, an anti-coloring agent, and a fluorescent brightening agent. These may be used alone or two or more thereof may be used.

The polymerizable composition preferably contains an ultraviolet absorber. It is possible to improve weather resistance of the resin, to prevent aging and yellowing, and to maintain transparency at the time of utilization by containing the ultraviolet absorber.

Examples of the ultraviolet absorber include a benzotriazole-based compound, a benzophenone-based compound, dibenzoylmethane, and 4-tert-butyl-4'-methoxybenzoylmethane. Among these, a benzotriazole-based compound is preferable.

The polymerizable composition preferably further contains, as a benzophenone-based compound, an ultraviolet absorber represented by Formula (U1): 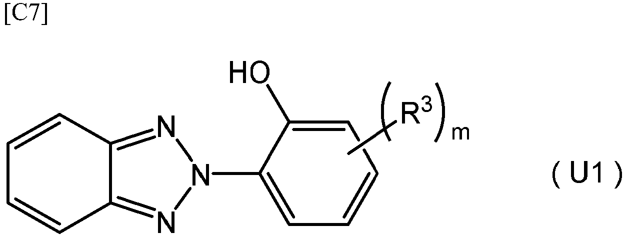 (where
R³ is an alkyl group having 1 to 20 carbon atoms or an alkoxy group having 1 to 20 carbon atoms, and
m is an integer of 1 or 2). By using the ultraviolet absorber, it is possible to suppress deterioration of image information passing through the light guide plate with little absorption in the visible light region while suppressing deterioration of resin due to absorption of high-energy light.

R³ is preferably an alkoxy group having 1 to 20 carbon atoms. The number of carbon atoms in the alkoxy group of R³ is preferably 1 to 20, is more preferably 3 to 18, and is further preferably 6 to 16. Examples of the alkoxy group of R³ include a methoxy group, an ethoxy group, a propyloxy group, a hexyloxy group, an octyloxy group, a dodecenyloxy group, and a lauryloxy group.

The number of carbon atoms in the alkyl group of R³ is preferably 1 to 20, is more preferably 3 to 18, and is further preferably 6 to 16. Examples of the alkyl group of R³ include a methyl group, an ethyl group, a propyl group, a tertiary butyl group, a hexyl group, an octyl group, a dodecenyl group, and a lauryl group.

m is preferably 1.

Examples of the benzotriazole-based compound include 2-(2-hydroxy-5-methylphenyl)-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, and 2-(2-hydroxy-4-octyloxyphenyl)-2H-benzotriazole. One kind of these may be used alone, or two or more kinds of these may be used in combination. Among these, 2-(2-hydroxy-4-octyloxyphenyl)-2H-benzotriazole is preferable.

Examples of the benzophenone compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, 2,2'-dihydroxy-4-methoxybenzophenone, and the like.

The amount of the ultraviolet absorber to be added is preferably 0.001% by mass to 5% by mass, is more preferably 0.01% by mass to 3% by mass, and is further preferably 0.05% by mass to 1% by mass with respect to the total amount of the epithio compound and the thioether compound.

In the polymerizable composition, the content of the coloring agent (hereinafter, also referred to as a "coloring agent L") having a maximum absorption wavelength in the range of 550 nm or more and 600 nm or less in 20 ppm by mass of toluene solution is preferably 0.1% by mass or less from the viewpoint of obtaining a resin substrate having a high internal transmittance.

From the viewpoint of obtaining a slightly bluish resin with a favorable color tone, the coloring agent L has a maximum absorption wavelength of 550 nm or more and 600 nm or less in 20 ppm by mass of toluene solution. Here, 20 ppm by mass in a toluene solution means the proportion of the solute with respect to the entire toluene solution.

In addition, from the viewpoint of obtaining a slightly bluish lens substrate with a favorable color tone, the maximum absorption wavelength of the coloring agent L is preferably 550 nm or more, is more preferably 560 nm or more, and is yet more preferably 580 nm or more. From the viewpoint of obtaining a slightly bluish resin with a favorable color tone, the maximum absorption wavelength of the coloring agent L is preferably 600 nm or less, and is more preferably 590 nm or less.

Examples of coloring agents L include C. I. Solvent Violet 11, 13, 14, 26, 31, 33, 36, 37, 38, 45, 47, 48, 51, 59, and 60; and C. I. Disperse Violet 26, 27, 28. Among these, C. I. Disperse Violet 27 and C. I. Solvent Violet 13, 31 are preferable, and in consideration of high stability and little change in the color tone even when the polymerizable composition is polymerized, C. I. Disperse Violet 27 and C. I. Solvent Violet 13 are more preferable, and C. I. Disperse Violet 27 is still more preferable.

The content of the coloring agent L is preferably 0.01% by mass or less, is more preferably 0.001% by mass or less, and is further preferably 0.001% by mass or less.

Examples of the antioxidant include a phenol-based antioxidant, a sulfur-based antioxidant, and a phosphorus-based antioxidant.

Examples of the phenol-based antioxidant include 2,6-di-t-butyl-4-methylphenol and phenol. Examples of the sulfur-based antioxidant include dilauryl 3,3'-thiodipropionate. Examples of the phosphorus-based antioxidant include phosphite compounds such as triphenyl phosphite, trioctyl phosphite, and tridecyl phosphite. One kind of these antioxidants may be used alone, or two or more kinds thereof may be used in combination.

The amount of the antioxidant to be added is preferably 0.01% by mass to 5% by mass, is more preferably 0.05% by mass to 3% by mass, and is further preferably 0.1% by mass to 2% by mass with respect to the entire polymerizable composition.

### [Resin]

The resin according to the present embodiment is a cured product of the polymerizable composition according to the present embodiment described above. Although the curing method is not particularly limited, the polymerizable composition can be cured by heating.

The density of the resin is preferably 0.93 g/cm³ to 2.10 g/cm³, is more preferably 1.20 g/cm³ to 1.80 g/cm³, and is further preferably 1.30 g/cm³ to 1.50 g/cm³. The density within this range makes it possible to reduce the weight of the light guide plate. The density of the resin can be measured by an underwater displacement method in accordance with JIS K7112-1: 2023.

The refractive index of the resin is preferably 1.60 or more, is more preferably 1.65 or more, and is further preferably 1.70 or more. Although the upper limit of the refractive index of the resin is not particularly limited, the upper limit is, for example, 2.00 or less. The refractive index of the substrate falling within the above range can widen the field of view. The refractive index can be measured in accordance with JIS K7142: 2014.

From the viewpoint of suppressing influences on the color tone of an image passing through the light guide plate, an average internal transmittance IT₄₂₀₋₇₈₀ of light with a wavelength of 420 nm to 780 nm in the resin is preferably 95% or more, is more preferably 97% or more, and is further preferably 98% or more.

The average internal transmittance IT₄₂₀₋₇₈₀ means the average value of the internal transmittance IT_{w} of light with the wavelength of 420 nm to 780 nm. The internal transmittance IT_{w} is calculated by the following expression for each wavelength by producing two samples having different thicknesses. [Math. 1] $log {IT}_{w} = - \frac{log {T}_{w 1} - log {T}_{w 2}}{Δd} \times 10$ where T_{w1} is transmittance of light with a wavelength w (nm) in the measurement sample having a specific thickness, T_{w2} is transmittance of light with a wavelength w (nm) in a measurement sample having a thicker thickness than T_{w1}, Δd is a thickness difference (mm) between T_{w2} and T_{w1}. The aforementioned internal transmittance IT_{w} means the internal transmittance in the case of the thickness of the 10 mm. The transmittance of light with each wavelength can be measured using an ultraviolet visible near-infrared spectrophotometer "UH4150" (trade name, Hitachi High-Tech Corporation). It should be noted that the average internal transmittance IT₄₂₀₋₇₈₀ is achieved by using a small-coloration material as a resin material and by containing no dye such as a bluing agent.

From the viewpoint of suppressing influences of the internal transmittance IT_{w} on the color tone of the image passing through the light guide plate in the resin, the internal transmittance IT_{w} in the resin is preferably 83% or more for light with a wavelength of 420 nm to 780 nm. From the viewpoint of further suppressing influences on the color tone of the image passing through the light guide plate, the internal transmittance IT_{w} is more preferably 85% or more, is further preferably 90% or more, and is yet further preferably 95% or more for light with a wavelength of 420 nm to 780 nm. The method of measuring the internal transmittance IT_{w} is as described above. Note that the condition of the internal transmittance IT_{w} is achieved by using a small coloration material as the resin material and by containing no dye such as a bluing agent.

From the viewpoint of suppressing influences on the color tone of the image passing through the light guide plate, the average internal transmittance IT₅₅₀₋₆₅₀ of light with a wavelength of 550 nm to 650 nm in the resin is preferably 95% or more, is more preferably 96% or more, and is further preferably 98% or more. The average internal transmittance IT₅₅₀₋₆₅₀ means the average value of the internal transmittance IT_{w} of light with the wavelength of 420 nm to 780 nm. The measuring method and the calculating method thereof are the same as those of the aforementioned average internal transmittance IT₄₂₀₋₇₈₀ except that the wavelength ranges of the light are different.

From the viewpoint of further suppressing influences on the color tone of the image passing through the light guide plate, the value of (IT₄₂₀₋₇₈₀ - IT₅₅₀₋₆₅₀)/IT₄₂₀₋₇₈₀ is preferably 5% or less, is more preferably 3% or less, and is further preferably 1% or less. The value is calculated from the average internal transmittance IT₄₂₀₋₇₈₀ and the average internal transmittance IT₅₅₀₋₆₅₀ described above.

From the viewpoint of improving light resistance of the resin, the average internal transmittance IT₃₀₀₋₃₈₀ of light with a wavelength of 300 nm to 380 nm in the resin is preferably 50% or less, is more preferably 30% or less, is further preferably 10% or less, and is yet further preferably 1% or less. The average internal transmittance IT₃₀₀₋₃₈₀ means the average value of the internal transmittance IT_{w} of light with a wavelength of 300 nm to 380 nm. The measuring method and the calculating method thereof are the same as those of the aforementioned average internal transmittance IT₄₂₀₋₇₈₀ except that the wavelength ranges of the light are different.

From the viewpoint of improving light resistance of the resin, the average internal transmittance IT₃₀₀₋₃₂₀ of light with a wavelength of 300 nm to 320 nm in the resin is preferably 30% or less, is more preferably 10% or less, is further preferably 1% or less, and is yet further preferably 0.1% or less. The average internal transmittance IT₃₀₀₋₃₂₀ means the average value of the internal transmittance IT_{w} of light with a wavelength of 300 nm to 320 nm. The measuring method and the calculating method thereof are the same as those of the aforementioned average internal transmittance IT₄₂₀₋₇₈₀ except that the wavelength ranges of the light are different.

### [Resin Base]

A resin substrate according to the present embodiment contains the above-described resin according to the present embodiment described above.

Fig. 1 is a diagram illustrating a substantial shape of the resin substrate according to the present embodiment. A resin substrate 100 has a disk shape. A light guide plate 10, which will be described later, is cut out from the resin substrate 100 and is used.

The thickness of the resin substrate is preferably 0.1 mm to 2.0 mm, is more preferably 0.2 mm to 1.5 mm, and is further preferably 0.3 mm to 1.0 mm. Note that the thickness of the resin substrate corresponds to that of the light guide plate. Note that the thickness of the resin substrate or the substrate of the light guide plate can be measured using an ultrasonic thickness meter.

Although the shape of the resin substrate according to the present embodiment is not particularly limited, the resin substrate may be a disk. Although the diameter of the disk is not particularly limited, the diameter may be, for example, 50 mm to 450 mm, or 60 mm to 150 mm. The resin substrate according to the present embodiment may have a shape in which base curves such as a convex surface and a concave surface are not formed as in the lens substrate, and may have a flat plate shape, for example.

The parallelism of the resin substrate is preferably 10 µm or less, is more preferably 1 µm or less, is further preferably 0.5 µm or less, and is yet further preferably 0.1 µm or less. The parallelism falling within this range can make it possible to obtain satisfactory performance as the light guide plate. Although the lower limit value of the parallelism of the resin substrate is not particularly limited, the lower limit value may be 0.01 µm or more, for example. The parallelism is defined in JIS B 0621-1984 and is measured by a three-dimensional measuring instrument.

The flatness of the resin substrate is preferably 25.0 µm or less, is more preferably 20.0 µm or less, is further preferably 12.0 µm or less, and is yet further preferably 10.0 µm or less. Although the lower limit of the flatness is not particularly limited, the lower limit is, for example, 0.1 µm or more. For the flatness, the flatness of one surface of the substrate is measured, and the value tends to increase when the substrate is curved or warps. The flatness can be measured using a flatness tester (FT-15) manufactured by Nidek Corporation. Removal of the residual stress allows the flatness value of the resin substrate to be adjusted to a small value.

TTV of the resin substrate is preferably 3 µm or less, is more preferably 1 µm or less, and is further preferably 0.5 µm or less. Although the lower limit of TTV is not particularly limited, the lower limit may be, for example, 0.01 µm or more. The term "TTV" means the difference (that is, a total thickness variation (TTV)) between the maximum value and the minimum value of the thickness (that is, the distance between the first surface 10a and the second surface 10b of the substrate of the light guide plate). TTV can be measured by a bow/warp measuring apparatus SBW-331ML/d manufactured by Kobelco Research Institute, Inc.

The resin substrate is preferably for the cross reality device light guide plate. Cross reality is a technology of fusing images in the real and virtual worlds, and is a comprehensive generic term for virtual reality (VR), augmented reality (AR), and mixed reality (MR). The cross reality device is a device used for the cross reality, and includes, for example, a head-mounted display. As described above, a light guide plate is used in the cross reality device to project images on the retina of the wearer. The resin substrate according to the present embodiment is preferably used for the light guide plate. A substrate to be used for the light guide plate is cut out from the resin substrate according to the present embodiment and used.

Examples of the resin substrate according to the present embodiment include a casting polymerization method in which the resin substrate is obtained by casting and polymerizing a polymerizable composition, and an injection molding method in which a molten resin is injected into a mold.

In the case of the casting polymerization method as illustrated in Fig. 2, the method for producing the resin substrate includes a casting polymerization process of obtaining the resin substrate by casting and polymerizing the polymerizable composition, may further include a slicing process of slicing the resin substrate to obtain the resin substrate with a desired thickness, and may further include an annealing process of removing a residual stress through heat treatment and a polishing process of performing polishing by a polishing device for the purpose of obtaining predetermined roughness and flatness of the resin substrate and further reducing variations in distribution of the residual stress.

Specifically, a raw material solution for the resin substrate is injected into a cavity, which is formed by two molds disposed at a predetermined interval. The resin substrate is formed by a curing reaction of the raw material solution, and the resin substrate is released from the mold. Subsequently, the released resin substrate is sliced using a wire saw to a predetermined thickness of 0.3 mm to 2.0 mm, and is then polished by a polishing device with a sufficient margin until wire saw marks disappear, thereby obtaining a resin substrate having a thickness of 0.1 mm to 1.5 mm. Note that the released resin substrate may be cut along its outer periphery to form a smooth surface as required, and may then be sliced by the wire saw.

Any polishing device can be used as long as it is possible to perform polishing without giving anisotropy to the substrate surface, and specifically, a lapping and polishing device can be preferably used.

It is possible to remove scratches and residual stress on the surface of the resin substrate by disposing the resin substrate on a flat surface plate, pouring a slurry of alumina, silica, or the like, and pressing and rotating the surface plate and the resin substrate under a predetermined pressure to polish them. Although for polishing the resin substrate, both a single-side polishing device and a double-side polishing device can be used, processing marks produced on both sides of the substrate such as wire saw marks and the residual stress can be uniformly removed, and the flatness can be reduced to a small value.

### [Waveguide Device]

Fig. 3 is a schematic sectional view illustrating an embodiment of a waveguide device according to the present embodiment. A waveguide device 1 includes a light guide plate 10 containing a resin, a diffraction grating 52, and a diffraction grating 32. Each of the diffraction gratings 52 and 32 is formed on a main surface of the light guide plate 10 on each side. Light with each wavelength is introduced from an image display device 24 to the diffraction grating 52.

The image display device 24 is, for example, a transmission type liquid crystal (LCD T-LCOS) panel driven by a field sequential method. The image display device 24 modulates the light with each wavelength in accordance with an image signal generated by an image engine (not illustrated) of a signal processing device 5. The light with each wavelength which has been modulated by pixels in an effective area of the image display device 24 is made incident on the light guide plate 10 with a predetermined light flux section (having substantially the same shape as the effective area). It should be noted that the image display device 24 may be replaced by a display element in another form such as a digital mirror device (DMD), a reflection type liquid crystal (LCOS) panel, a micro electro mechanical system (MEMS), an organic electro-luminescence (EL), or an inorganic EL, for example.

As illustrated in Fig. 3, the diffraction grating 52 is laminated on a second surface 10b of the light guide plate 10. On the diffraction grating 52, a pitch of an interference fringe pattern, for example, may be formed. Note that a hologram element may be used as the diffraction grating 52.

The light with each wavelength modulated by the image display device 24 is sequentially incident from a first surface 10a into the light guide plate 10.

The diffraction grating 52 diffracts the sequentially incident light with each wavelength at a predetermined angle in order to guide the light to the eyes of a wearer. The light with each wavelength diffracted by the diffraction grating 52 repeats total reflection at the interface between the light guide plate 10 and air, propagates inside the light guide plate 10, and is then incident on the diffraction grating 32.

The light with each wavelength incident on the diffraction grating 32 is diffracted by the diffraction grating 32 and is sequentially emitted from the second surface 10b of the light guide plate 10 to the outside in a substantially orthogonal direction. An image of the light with each wavelength which has been emitted as substantially parallel light is formed on the retina of the wearer as a virtual image I of an image generated by the image display device 24.

### <Light Guide Plate>

The light guide plate 10 in the waveguide device 1 according to the present embodiment contains the resin according to the present embodiment described above. By using a substrate containing the resin according to the present embodiment described above as a substrate, a material having a relatively low density while having a high refractive index can be used, and the light guide plate that enables the weight of the wearable device to be reduced and further has a suppressed yellowness degree can thus be obtained.

Although the shape of the substrate of the light guide plate is not particularly limited, the substrate may be a quadrilateral plate.

### [Optical Component for Eyewear]

The optical component for eyewear according to the present embodiment includes a resin lens substrate and the waveguide device according to the present embodiment.

Note that the refractive index (RW) of the light guide plate is larger than the refractive index (RT) of the lens substrate. The difference (RW - RT) between the refractive index (RW) of the light guide plate and the refractive index (RT) of the translucent substrate is preferably 0.2 to 1.0, is more preferably 0.3 to 0.8, and is further preferably 0.3 to 0.5.

Although the optical component for eyewear is not particularly limited as long as it can be applied to a wearable device, an eyeglass lens applicable to an eyeglass-type wearable device may be adopted. In this case, the translucent substrate has the shape of an eyeglass lens substrate. The eyeglass lens substrate does not necessarily have a spherical surface and may be a flat plate having a shape suitable for an eyeglass frame.

### [Wearable Device]

As a wearable device using the light guide plate according to the present embodiment, a head-mounted display can be listed, for example. The head-mounted display includes, for example, an eyeglass-type frame that is attached to the head of the wearer and the optical component for eyewear according to the present embodiment attached inside the frame. A backlight for illuminating an image, a signal processing device for projecting an image, a speaker for reproducing sound, and the like may be attached to the eyeglass-type frame.

As described above, the present disclosure provides the following embodiments.
<1> A polymerizable composition containing: an epithio compound containing a compound represented by Formula (E1): 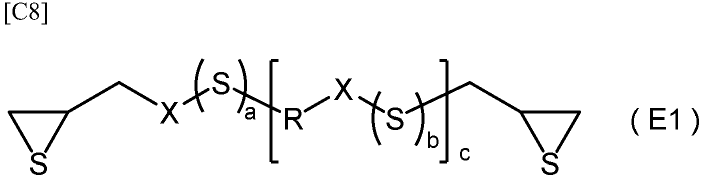
   (where X is S or O, a is an integer of 0 or 1, R is a divalent hydrocarbon having 1 to 10 carbon atoms, b is an integer of 0 or 1, and c is an integer of 0 to 2);
   a thioether compound having a mercapto group; and
   a sulfur-containing substance in which an S atomic ratio is 70% by mass or more.
<2> The polymerizable composition according to <1>, in which the sulfur-containing substance includes elemental sulfur or lenthionine.
<3> The polymerizable composition according to <1>, in which the sulfur-containing substance includes lenthionine.
<4> The polymerizable composition according to any one of <1> to <3>, in which a content of the sulfur-containing substance is 1% by mass to 30% by mass in the polymerizable composition.
<5> The polymerizable composition according to any one of <1> to <4>, in which the compound represented by the Formula (E1) includes bis(β-epithiopropyl)sulfide or bis(β-epithiopropyl)disulfide.
<6> The polymerizable composition according to any one of <1> to <5>, in which a content of the epithio compound is 50% by mass to 98% by mass in the polymerizable composition.
<7> The polymerizable composition according to any one of <1> to <6>, in which the thioether compound is a compound having a cyclic thioether skeleton.
<8> The polymerizable composition according to <7>, in which the thioether compound contains a compound represented by Formula (T1): 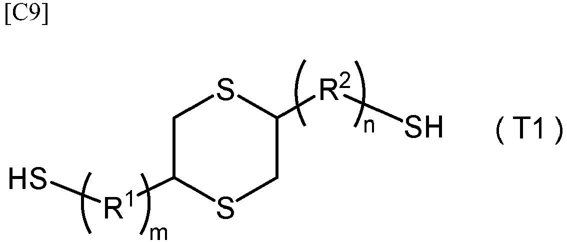 (where
   R¹ and R² are each independently a divalent hydrocarbon group having 1 to 6 carbon atoms, and
   m and n are each independently 0 or 1).
<9> The polymerizable composition according to any one of <1> to <8>, in which the thioether compound contains a compound represented by Formula (T2): 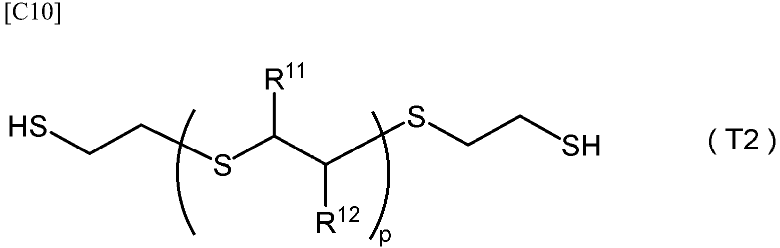 (where
   R¹¹ and R¹² are each independently hydrogen or a mercaptomethyl group, and
   p is 1 or 2).
<10> The polymerizable composition according to any one of <1> to <9>, in which a content of the thioether compound is 5 parts by mass to 50 parts by mass with respect to 100 parts by mass of the epithio compound.
<11> The polymerizable composition according to any one of <1> to <10>, further containing: an ultraviolet absorber represented by Formula (U1): 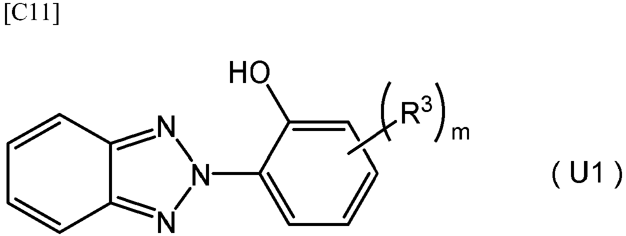 (where
   R³ is an alkyl group having 1 to 20 carbon atoms or an alkoxy group having 1 to 20 carbon atoms, and
   m is an integer of 1 or 2).
<12> The polymerizable composition according to <11>, in which a content of the ultraviolet absorber is 0.001% by mass to 5% by mass with respect to a total amount of the epithio compound and the thioether compound.
<13> A resin, which is a cured product of the polymerizable composition according to any one of <1> to <12>.
<14> The resin according to <13>, in which an average internal transmittance IT₄₂₀₋₇₈₀ for light with a wavelength of 420 nm to 780 nm is 95% or more.
<15> The resin according to <13> or <14>, in which an internal transmittance IT_{w} is 83% or more for light with a wavelength of 420 nm to 780 nm.
<16> The resin according to any one of <13> to <15>, in which an average internal transmittance IT₃₀₀₋₃₈₀ for light with a wavelength of 300 nm to 380 nm is 50% or less.
<17> The resin according to any one of <13> to <16>, in which an average internal transmittance IT₃₀₀₋₃₂₀ for light with a wavelength of 300 nm to 320 nm is 30% or less.
<18> The resin according to any one of <13> to <17>, in which an average internal transmittance IT₅₅₀₋₆₅₀ for light with a wavelength of 550 nm to 650 nm is 95% or more.
<19> The resin according to any one of <13> to <18>, in which a value of (IT₄₂₀₋₇₈₀ - IT₅₅₀₋₆₅₀)/IT₄₂₀₋₇₈₀ is 5% or less.
<20> A resin substrate including the resin according to any one of <13> to <19>.
<21> The resin substrate according to <20>, in which parallelism of the resin substrate is 10 µm or less.
<22> The resin substrate according to <20> or <21>, in which a thickness of the resin substrate is 0.1 mm to 2.0 mm.
<23> The resin substrate according to any one of <20> to <22>, which is for a cross reality device light guide plate.
<24> A light guide plate, which is made of the resin substrate according to any one of <20> to <23>.
<25> A waveguide device including: the light guide plate according to <24>; and a diffraction grating or a hologram element formed on the light guide plate.
<26> An optical component for eyewear including:
   a resin lens substrate; and
   the waveguide device according to <25>.
<27> A wearable device including: the optical component for eyewear according to <26>. Example

Although the present embodiment will be described below in more detail with reference to examples, the present embodiment is not limited to the following examples.

### <Gel Permeation Chromatography (GPC)>

Measurement was performed using a gel permeation chromatography apparatus ("GPC104" manufactured by Showa Denko K.K., detector: RI "RI-74s", pump: DU-H2000). About 0.2 g of sample was dissolved in 20 mL of chloroform to obtain a measurement sample. Chloroform was used as an eluent, KF-401HQ and KF-402HQ were used as sample-side columns, and KF-600RH was used as a reference-side column. The measurement was made under conditions of a column temperature of 40°C and a flow rate of 1.00 mL/min. The ratio of the area of each component with respect to the total value of the observed peak areas was calculated. In the table, a peak having the largest area is shown by an area percentage (%) as a main peak.

### <Refractive Index and Abbe Number>

The refractive index of a sample was measured using a precision refractometer "KPR-2000" (manufactured by Kalnew Optical Industrial Co., Ltd.) at 20°C with an F line (486.1 nm), a C line (656.3 nm), a d line (587.6 nm), an e line (546.1 nm), an r line (706.52 nm), a C' line (643.9 nm), and an F' line (488.0 nm). Then, the Abbe number was calculated from the following formula.$Abbe number vd = \left(nd-1\right) / \left(nF-nC\right)$

The nd denotes a refractive index measured with the d line, nF denotes a refractive index measured with the F line, and nC represents a refractive index measured with the C line.

### <Glass Transition Temperature (Tg)>

The measurement was carried out by a penetration method (sample thickness: 3 mm, pin diameter: 0.5 mm, load: 10 g, heating rate: 10°C/min) using a Thermo-mechanical analyzer, "Thermo Plus EVO2" (manufactured by Rigaku Corporation), and the temperature of the peak value where thermal expansion was changed was regarded as the glass transition temperature (Tg). The glass transition temperature was evaluated as not detectable in a case where no peak value was observed.

### <YI>

The yellowness index (YI) was measured in accordance with JIS K 7373:2006 using a spectrophotometer "U-4100" (manufactured by Hitachi, Ltd.) as a measuring apparatus. The yellowness index YI is a numerical value representing the intensity of yellowness, and a larger YI value means that the yellowness is stronger.

### <Transmittance>

The transmittance of light with each wavelength was measured using an ultraviolet visible near-infrared spectrophotometer "UH4150" (trade name, Hitachi High-Tech Corporation).

### <Internal Transmittance IT_{w}>

The internal transmittance IT_{w} was calculated for each wavelength from the following expression by creating two samples having different thicknesses. [Math. 2] $log {IT}_{w} = - \frac{log {T}_{w 1} - log {T}_{w 2}}{Δd} \times 10$

With the proviso that T_{w1} is transmittance of light with a wavelength w (nm) in a measurement sample having a specific thickness, T_{w2} is transmittance of light with a wavelength w (nm) in a measurement sample having a thicker thickness than T_{w1}, and Δd is a thickness difference (mm) between T_{w2} and T_{w1}. The transmittance of light with each wavelength was measured by the method described in "Transmittance" above. The internal transmittance IT_{w} indicates the value of the internal transmittance at the thickness of 10 mm.

### [Example 1]

200 parts by mass of bis(β-epithiopropyl)sulfide, 30 parts by mass of 2,5-bismercaptomethyl-1,4-dithiane, 0.06% by mass of benzyltriethylammonium chloride as a catalyst (with respect to the resin component), 0.20 parts by mass of 2-(2-hydroxy-4-octyloxyphenyl)-2H-benzotriazole as an ultraviolet absorber, and 3% by mass of lenthionine (with respect to the polymerizable composition) were added, followed by stirring and mixing under a reduced pressure of 10 mmHg for 10 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds, thereby obtaining a resin substrate with a thickness of 10 mm. Various resin properties were measured by the above-described methods and are shown in Table 1.

### [Example 2]

A resin substrate with a thickness of 10 mm was obtained similarly to Example 1 other than that 2,5-bismercaptomethyl-1,4-dithiane was changed to the thiol compound shown in Table 1. Various resin properties were measured by the above-described method and are shown in Table 1.

### [Comparative Example 1]

A resin substrate with a thickness of 10 mm was obtained similarly to Example 1 other than that lenthionine was not added. Various resin properties were measured by the above-described method and are shown in Table 1.

### [Comparative Example 2]

A resin substrate with a thickness of 10 mm was obtained similarly to Example 2 other than that lenthionine was not added. Various resin properties were measured by the above-described method and are shown in Table 1.

### [Table 1]

**Table 1**

| | Epithio compound | | **Thiol** compound | | UV absorber | | Catalyst | | Sulfur-containing substance | | Resin properties | | | | |
|---|---|---|---|---|---|---|---|---|---|---|---|---|---|---|---|
| | Compound | Part by mass | Compound | Part by mass | Compound | Part by mass | Compound | %*by mass | Substance name | % by mass | Flat plate thickness | Refractive index | Abbe' s number | Tg | YI |
| Example1 | E1-1 | 200 | T1-1 | 30 | U-1 | 0.20 | C-1 | 0.06 | S-1 | 3 | 10m m | 1.709 | 35.8/35.5 | Not detected | 1.98 |
| Example2 | E1-1 | 200 | T2-2 | 30 | U-1 | 0.20 | C-1 | 0.06 | S-1 | 3 | 10m m | 1.708 | 35.8/35.6 | Not detected | 1.98 |
| Comparative Example1 | E1-1 | 200 | T1-1 | 30 | U-1 | 0.20 | C-1 | 0.06 | - | - | 10m m | 1.706 | 36.0/35.7 | Not detected | 1.20 |
| Comparative Example2 | E1-1 | 200 | T2-2 | 30 | U-1 | 0,20 | C-1 | 0.06 | - | - | 10m m | 1.705 | 36.0/35.7 | Not detected | 1.70 |

| | | | | | | | | | | | | | | | |
|---|---|---|---|---|---|---|---|---|---|---|---|---|---|---|---|
| * Ratio of catalyst with respect to total amount of epithio compound and thiol compound | | | | | | | | | | | | | | | |

The various abbreviations in the table mean as follows:
E1-1: bis(β-epithiopropylthio)sulfide
T1-1: 2,5-mercaptomethyl-1,4-dithiane
T2-2: a mixture of 4,7-bis(mercaptomethyl)-3,6,9-trithiaundecane-1,11-dithiol, 4,8-bis(mercaptomethyl)-3,6,9-trithiaundecane-1,11-dithiol and 5,7-bis(mercaptomethyl)-3,6,9-trithiaundecane-1,11-dithiol
U-1: 2-(2-hydroxy-4-octyloxyphenyl)-2H-benzotriazole
C-1: benzyltriethylammonium chloride
S-1: lenthionine

### [Example 5]

100.00 parts by mass of bis(β-epithiopropyl)sulfide, 15 parts by mass of 2,5-bismercaptomethyl-1,4-dithiane, 0.03 parts by mass of tetrabutylphosphonium bromide as a catalyst, and 0.1 parts by mass of 2-(2-hydroxy-4-octyloxyphenyl)-2H-benzotriazole as an ultraviolet absorber were added, followed by stirring and mixing under a reduced pressure of 10 mmHg for 10 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. Similarly, a resin substrate having a different thickness was formed and released from the molds. The thicknesses of the resin substrates thus obtained were 2.90 mm and 4.98 mm, respectively.

The transmittances of the two kinds of resin substrates were measured, and the internal transmittances were calculated. The measurement results of the transmittance of the resin substrate with a thickness of 4.98 mm are shown in Fig. 4, and the calculation results of the internal transmittance are shown in Fig. 5.

The refractive indexes were d: 1.7094, C: 1.7036, F: 1.7232, e: 1.7140, r: 1.7004, C': 1.7045, and F': 1.7245, and the Abbe numbers were vd: 36.1 and ve: 35.8.

The glass transition temperature was undetectable. Note that the resin density was 1.41 g/cm³.

The average internal transmittance IT₄₂₀₋₇₈₀ was 99.7%, the minimum value of the internal transmittance IT₄₂₀₋₇₈₀ was 97.1%, the average internal transmittance IT₅₅₀₋₆₅₀ was 99.8%, and the minimum value of the internal transmittance IT₅₅₀₋₆₅₀ was 99.6%. Note that the average internal transmittance IT₃₀₀₋₃₈₀ was 0 and the average internal transmittance IT₃₀₀₋₃₂₀ was 0.

Note that the resin substrate thus obtained had low water absorbability.

### [Example 6]

100.00 parts by mass of bis(β-epithiopropyl)sulfide, 10 parts by mass of 2,5-bismercaptomethyl-1,4-dithiane, 0.03 parts by mass of tetrabutylphosphonium bromide as a catalyst, and 0.1 parts by mass of 2-(2-hydroxy-4-octyloxyphenyl)-2H-benzotriazole as an ultraviolet absorber were added, followed by stirring and mixing under a reduced pressure of 10 mmHg for 10 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. The thickness of the resin substrate thus obtained was 2.90 mm.

The refractive indexes were d: 1.7103, C: 1.7045, F: 1.7244, e: 1.7151, r: 1.7015, C': 1.7055, and F': 1.7257, and the Abbe numbers were vd: 35.7 and ve: 35.5.

The glass transition temperature was undetectable.

### [Example 7]

100.00 parts by mass of bis(β-epithiopropyl)sulfide, 12.5 parts by mass of 2,5-bismercaptomethyl-1,4-dithiane, 0.03 parts by mass of tetrabutylphosphonium bromide as a catalyst, and 0.1 parts by mass of 2-(2-hydroxy-4-octyloxyphenyl)-2H-benzotriazole as an ultraviolet absorber were added, followed by stirring and mixing under a reduced pressure of 10 mmHg for 10 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. The thickness of the resin substrate thus obtained was 2.90 mm.

The refractive indexes were d: 1.7082, C: 1.7023, F: 1.7226, e: 1.7131, r: 1.6992, C': 1.7033, and F': 1.7239, and the Abbe numbers were vd: 34.9 and ve: 34.7.

The glass transition temperature was undetectable.

### [Example 8]

The polymerizable composition described in Example 1 was injected into a cavity formed by two molds disposed at a predetermined interval. The resin substrate was formed by a curing reaction of the raw material solution and was then released from the molds. Then, the released resin substrate was sliced using a wire saw into a plurality of resin substrates with a thickness of 1.1 mm. In order to remove a residual stress generated by scratches during processing caused by the slicing, annealing was carried out under the conditions of 170°C and 3 hours with the plurality of resin substrates stacked with spacers interposed therebetween. Thereafter, polishing was performed under a pressure of 6 kPa by a lapping machine of a double-side polishing scheme using an alumina slurry with an average particle diameter of 0.5 µm. A resin substrate having a thickness of 1.0 mm was formed by the above method. Note that flatness of the resin substrate was 3.5 µm and TTV of the resin substrate was 0.8 µm.

### Reference Signs List

- 1: Waveguide device
- 10: Light guide plate
- 24: Image display device
- 32, 52: Diffraction grating

## Claims

1. A polymerizable composition comprising:
an epithio compound containing a compound represented by Formula (E1): 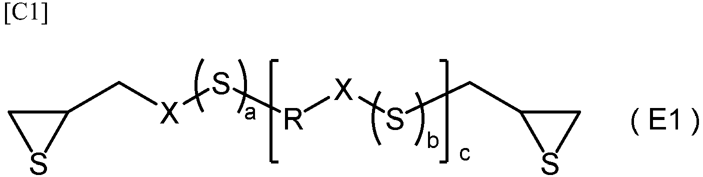
(where X is S or O, a is an integer of 0 or 1, R is a divalent hydrocarbon having 1 to 10 carbon atoms, b is an integer of 0 or 1, and c is an integer of 0 to 2);
a thioether compound having a mercapto group; and
a sulfur-containing substance in which an S atomic ratio is 70% by mass or more.

2. The polymerizable composition according to claim 1, wherein the sulfur-containing substance includes elemental sulfur or lenthionine.

3. The polymerizable composition according to claim 1, wherein the sulfur-containing substance includes lenthionine.

4. The polymerizable composition according to claim 1, wherein a content of the sulfur-containing substance is 1% by mass to 30% by mass in the polymerizable composition.

5. The polymerizable composition according to claim 1, wherein the compound represented by the Formula (E1) includes bis(β-epithiopropyl)sulfide or bis(β-epithiopropyl)disulfide.

6. The polymerizable composition according to claim 1, wherein a content of the epithio compound is 50% by mass to 98% by mass in the polymerizable composition.

7. The polymerizable composition according to claim 1, wherein the thioether compound is a compound having a cyclic thioether skeleton.

8. The polymerizable composition according to claim 7, wherein the thioether compound contains a compound represented by Formula (T1): 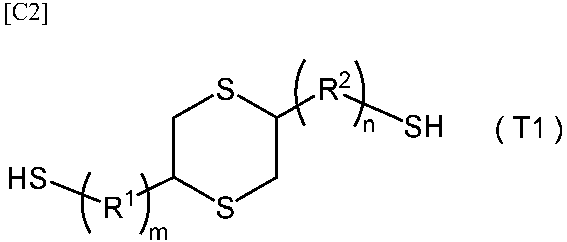 (where
R¹ and R² are each independently a divalent hydrocarbon group having 1 to 6 carbon atoms, and
m and n are each independently 0 or 1).

9. The polymerizable composition according to claim 1, wherein the thioether compound contains a compound represented by Formula (T2): 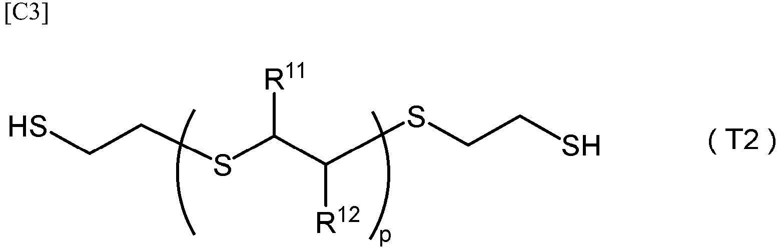 (where
R¹¹ and R¹² are each independently hydrogen or a mercaptomethyl group, and
p is 1 or 2).

10. The polymerizable composition according to claim 1, wherein a content of the thioether compound is 5 parts by mass to 50 parts by mass with respect to 100 parts by mass of the epithio compound.

11. The polymerizable composition according to claim 1, further comprising: an ultraviolet absorber represented by Formula (U1): 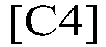 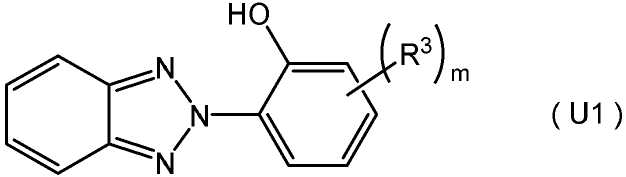 (where
R₃ is an alkyl group having 1 to 20 carbon atoms or an alkoxy group having 1 to 20 carbon atoms, and
m is an integer of 1 or 2).

12. The polymerizable composition according to claim 11, wherein a content of the ultraviolet absorber is 0.001% by mass to 5% by mass with respect to a total amount of the epithio compound and the thioether compound.

13. A resin, which is a cured product of the polymerizable composition according to any one of claims 1 to 12.

14. The resin according to claim 13, wherein an average internal transmittance IT₄₂₀₋₇₈₀ for light with a wavelength of 420 nm to 780 nm is 95% or more.

15. The resin according to claim 13, wherein an internal transmittance IT_{w} is 83% or more for light with a wavelength of 420 nm to 780 nm.

16. The resin according to claim 13, wherein an average internal transmittance IT₃₀₀₋₃₈₀ for light with a wavelength of 300 nm to 380 nm is 50% or less.

17. The resin according to claim 13, wherein an average internal transmittance IT₃₀₀₋₃₂₀ for light with a wavelength of 300 nm to 320 nm is 30% or less.

18. The resin according to claim 13, wherein an average internal transmittance IT₅₅₀₋₆₅₀ for light with a wavelength of 550 nm to 650 nm is 95% or more.

19. The resin according to claim 13, wherein a value of (IT₄₂₀₋₇₈₀ - IT₅₅₀₋₆₅₀)/IT₄₂₀₋₇₈₀ is 5% or less.

20. A resin substrate comprising the resin according to claim 13.

21. The resin substrate according to claim 20, wherein parallelism of the resin substrate is 10 µm or less.

22. The resin substrate according to claim 20, wherein a thickness of the resin substrate is 0.1 mm to 2.0 mm.

23. The resin substrate according to claim 20, which is for a cross reality device light guide plate.

24. A light guide plate, which is made of the resin substrate according to claim 20.

25. A waveguide device comprising: the light guide plate according to claim 24; and a diffraction grating or a hologram element formed on the light guide plate.

26. An optical component for eyewear comprising:
a resin lens substrate; and
the waveguide device according to claim 25.

27. A wearable device comprising: the optical component for eyewear according to claim 26.
